# EUROPÄISCHE PATENTANMELDUNG

(11) **EP 2 824 266 A2**
(43) Veröffentlichungstag der Anmeldung: **14.01.2015**
(21) Anmeldenummer: 14175690.8
(22) Anmeldetag: 03.07.2014
(51) Int. Cl.: E06B 3/02, B32B 17/06, E06B 5/16

(54) **Brandschutzverglasung**

(30) Priorität: 11.07.2013 DE 202013103075 U
(71) Anmelder: PROMAT GmbH, 40878 Ratingen (DE)
(72) Erfinder: Wiedemann, Günter, 40629 Düsseldorf (DE)
(74) Vertreter: Ring & Weisbrodt

(57) **Zusammenfassung**

Die vorliegende Erfindung betrifft eine Brandschutzverglasung zur Vermeidung des Durchtritts von Feuer und/oder Rauch im Brandfall aus einem Raum in einen anderen Raum, mit mindestens zwei unter Belassung einer Fuge (14) horizontal und/oder vertikal fluchtend zueinander angeordneten Brandschutzscheiben, wobei die Brandschutzscheiben jeweils aus einem Verbund von wenigstens zwei parallelen Glasscheiben (9, 10), zwischen denen wenigstens eine Brandschutzschicht angeordnet ist, bestehen, und wobei in der zwischen den Stoßflächen der Brandschutzscheiben ausgebildeten Fuge (14) ein Brandschutzmittel (15) angeordnet ist, welche dadurch gekennzeichnet ist, dass die Fuge (14) beidseits des in der Fuge (14) angeordneten Brandschutzmittels (15) jeweils mit einem Profilelement (16) abgedeckt ist, wobei die Profilelemente (16) an dem Brandschutzmittel (15) angrenzend anliegen.

## Beschreibung

Die vorliegende Erfindung betrifft eine Brandschutzverglasung zur Vermeidung des Durchtritts von Feuer und/oder Rauch im Brandfall von einem Raum in einen anderen Raum, mit mindestens zwei unter Belassung einer Fuge horizontal und/oder vertikal fluchtend zueinander angeordneten Brandschutzscheiben, wobei die Brandschutzscheiben jeweils aus einem Verbund von wenigstens zwei parallelen Glasscheiben, zwischen denen wenigstens eine Brandschutzschicht angeordnet ist, bestehen, und wobei in der zwischen den Stoßflächen der Brandschutzscheiben ausgebildeten Fuge ein Brandschutzmittel angeordnet ist.

Brandschutzverglasungen sind lichtdurchlässige Bauteile, die dazu bestimmt sind, entsprechend ihrer Feuerwiderstandsdauer nicht nur die Ausbreitung von Feuer und/oder Rauch, sondern bei Bedarf oder auf Wunsch zusätzlich auch einen unzulässigen Übergang von Wärme zu verhindern. Hierzu werden Brandschutzscheiben verwendet, die mehrlagig aus Glasscheiben mit mindestens einer dazwischen angeordneten Brandschutzschicht aus einem Intumeszenzmaterial, aufgebaut sind. Im Brandfall wird diese Brandschutzschicht aktiviert. Die Brandschutzschicht absorbiert die Wärmestrahlung und bildet eine hochwirksame Dämmschicht.

Als Brandschutzschicht zwischen den Glasscheiben finden feste, im Brandfall aufschäumende oder anderweitig volumenvergrößernde oder kühlende Materialien Verwendung. Im Brandfall tritt das Brandschutzmaterial dabei aus den Stoßflächen der Brandschutzscheibe aus und verschließt eine jeweils zur angrenzenden Brandschutzscheibe, Wand oder Decke und/oder - soweit verwendet bzw. vorgesehen - Rahmensystemen bzw. -konstruktionen belassene Fuge, so dass Flammen, Rauch und/oder Wärme nicht mehr durchtreten können.

Auch finden als Brandschutzschicht zwischen den Glasscheiben einer Brandschutzscheibe gelartige, wasserhaltige, insbesondere Alkalimetallsiliaktmasse enthaltende Materialien Verwendung, die im Brandfall nicht aufschäumen. Eine derartige Brandschutzscheibe ist aus wenigstens zwei auf Abstand gehaltenen, parallelen Glasscheiben aufgebaut, deren geschlossener Innenraum mit einem insbesondere gelartigen Brandschutzmittel gefüllt ist.

Bei einer solchen Brandschutzverglasung wird die zwischen mindestens zwei horizontal und/oder vertikal fluchtend zueinander angeordneten Brandschutzscheiben belassene Fuge bisher in der Regel mit Dichtstoffen wie Silikon bzw. silikonartigen Massen durch sogenanntes Verfugen geschlossen. Neben dem mit dem Verfugen von Brandschutzverglasungen verbundenen Zeit- bzw. Arbeitsaufwand und den dazu erforderlichen handwerklichen Fertigkeiten, insbesondere hinsichtlich optisch einheitlicher und sauberer Verfugungen, ist es nachteilig, dass insbesondere bei größeren Brandschutzverglasungen mit Brandschutzscheiben von etwa 3 m Höhe die Fugen bzw. Fugenbreiten nicht immer konstant sind, beispielsweise mal 6 mm, mal 8 mm, mal 10 mm oder mal 12 mm betragen, wodurch der optische Eindruck einer Brandschutzverglasung beeinträchtigt wird. Nachteilig ist bei Verfugungen mit Silikon bzw. silikonartigen Massen ferner, dass diese nach ein paar Jahren ihre dauerelastischen Eigenschaften verlieren, rissig werden, vergilben, verschimmeln und/oder undicht werden und letztendlich entfernt und erneuert werden müssen.

Der Erfindung liegt in Anbetracht dieses Standes der Technik die Aufgabe zugrunde, eine Brandschutzverglasung der vorgenannten Art hinsichtlich der Verfugung der zwischen mindestens zwei horizontal und/oder vertikal fluchtend zueinander angeordneten Brandschutzscheiben belassenen Fugen zu verbessern.

Die Aufgabe ist bei einer Brandschutzverglasung der vorgenannten Art erfindungsgemäß dadurch **gelöst**, dass die Fuge beidseits des in der Fuge angeordneten Brandschutzmittels jeweils mit einem Profilelement abgedeckt ist, wobei die Profilelemente an dem Brandschutzmittel angrenzend anliegen.

Durch die Verwendung von die Fuge abdeckenden bzw. überdeckenden Profilelementen beidseits des in der Fuge zwischen zwei Brandschutzscheiben angeordneten Brandschutzmittels, wobei die Profilelemente an dem Brandschutzmittel angrenzend anliegen, ist erfindungsgemäß quasi eine Trockenverfugung ermöglicht, welche unterschiedliche Fugenbreiten der Fuge zwischen mindestens zwei horizontal und/oder vertikal fluchtend zueinander angeordneten Brandschutzscheiben durch eine einheitliche Abdeckung toleriert und so quasi ausgleicht. Darüber hinaus ist die erfindungsgemäße Verfugung einer Brandschutzverglasung einfacher, schneller und sauberer erstellbar als auch austauschbar bzw. erneuerbar, insbesondere da lediglich die in entsprechender Länge der Fuge vorliegenden bzw. abzulängenden Profilelemente montiert bzw. demontiert werden müssen.

Eine vorteilhafte Ausgestaltung der Erfindung sieht vor, dass das in der Fuge angeordnete Brandschutzmittel zwischen den Profilelementen eingespannt ist bzw. einspannbar ist.

Vorteilhafterweise sind die Profilelemente mittels wenigstens einer Schraubverbindung und/oder mittels wenigstens einer Steckverbindung miteinander verbunden bzw. verbindbar.

Eine weitere vorteilhafte Ausgestaltung der Erfindung ist dadurch gekennzeichnet, dass das Brandschutzmittel in der zwischen den Stoßflächen der Brandschutzscheiben ausgebildeten Fuge ausschließlich in dem Bereich des Abstands der zwei auf Abstand gehaltenen, parallelen Glasscheiben der Brandschutzscheiben angeordnet ist. Das Brandschutzmittel weist dabei vorteilhafterweise eine Dicke, Stärke bzw. Tiefe auf, welche der Dicke, Stärke bzw. Tiefe der Brandschutzschicht zwischen den zwei parallelen Glasscheiben einer Brandschutzscheibe, das heißt dem Abstand zwischen den wenigstens zwei parallelen Glasscheiben einer Brandschutzscheibe, entspricht. Die Eindringtiefe bzw. Einragtiefe des Profilelements in die Fuge entspricht dabei vorteilhafterweise der Stärke einer Glasscheibe der beiden Glasscheiben der Brandschutzscheibe.

Bei einer derartigen Ausgestaltung sind die Profilelemente vorteilhafterweise wenigstens teilweise in der zwischen den Stoßflächen der Brandschutzscheiben ausgebildeten Fuge geführt bzw. führbar.

Eine weitere Ausgestaltung der Erfindung sieht vor, dass die Profilelemente in Längserstreckungsrichtung einen im Wesentlichen hutförmigen bzw. topfförmigen Querschnitt aufweisen. Vorteilhafterweise weisen die Profilelemente in Längserstreckungsrichtung einen im Wesentlichen U-förmigen Querschnitt mit zwei freien Schenkeln und einem senkrecht zu diesen verlaufenden Verbindungsschenkel auf, wobei die freien Enden der freien Schenkel parallel zu dem Verbindungsschenkel verlaufend ausgebildet sind und an den äußeren senkrecht zu den Stoßflächen der Brandschutzscheiben verlaufenden Flächen der Glasscheiben der Brandschutzscheiben anliegen bzw. aufliegen.

Eine besonders vorteilhafte Ausgestaltung der Erfindung sieht vor, dass die freien Enden der freien Schenkel in ihrer Erstreckungslänge derart gewählt sind, dass Toleranzen in der Breite der Fuge überdeckbar sind, so dass auch bei unterschiedlichen Fugenbreiten eine optisch einheitliche und saubere Verfugung realisierbar ist.

In einer bevorzugten Ausgestaltung der Erfindung grenzt bzw. liegt der Verbindungsschenkel der einen im Wesentlichen U-förmigen Querschnitt aufweisenden Profilelemente an dem in der zwischen den Stoßflächen der Brandschutzscheiben ausgebildeten Fuge angeordneten Brandschutzmittel plan an. Hierdurch wird die Montage der Profilelemente weiter vereinfacht, insbesondere da das Brandschutzmittel in der zwischen den Stoßflächen der Brandschutzscheiben ausgebildeten Fuge eine Anlage- und/oder Ausrichtungsfläche für die zu montierenden Profilelemente bereitstellt.

Eine weitere vorteilhafte Ausgestaltung der Erfindung sieht vor, dass die freien Enden der freien Schenkel der Profilelemente an den äußeren senkrecht zu den Stoßflächen der Brandschutzscheiben verlaufenden Flächen der Glasscheiben der Brandschutzscheiben unter Zwischenschaltung eines vorzugsweise feuerhemmenden Dichtmittels anliegen bzw. aufliegen. Vorteilhafterweise ist das Dichtmittel dabei an den Profilelementen angeordnet oder ausgebildet. Durch die erfindungsgemäße Verwendung des Dichtmittels wird zum einen die Abdichtung zwischen den Profilelementen und den Glasscheiben der Brandschutzscheiben verbessert und zum anderen verhindert, dass die an bzw. auf den Glasscheiben der Brandschutzscheiben an- bzw. aufliegenden Profilelemente die Glasscheiben der Brandschutzscheiben beschädigen, insbesondere verkratzen. In einer weiteren Ausgestaltung der Erfindung weist das Dichtmittel zur Verbesserung der Abdichtung wenigstens einen nasenartigen Vorsprung auf. Der nasenartige Vorsprung ist vorteilhafterweise im Endbereich der freien Enden der freien Schenkel ausgebildet.

Eine weitere Ausgestaltung der Erfindung sieht vor, dass die freien Schenkel der einen im Wesentlichen U-förmigen Querschnitt aufweisenden Profilelemente in einer parallel zu den Stoßflächen der Brandschutzscheiben liegenden Ebene verlaufen. Dabei verlaufen bzw. erstrecken sich die freien Schenkel parallel zu den Stoßflächen der Glasscheiben der zwei horizontal und/oder vertikal fluchtend zueinander angeordneten Brandschutzscheiben.

In einer weiteren vorteilhaften Ausgestaltung der Erfindung weisen die Profilelemente und/oder das Brandschutzmaterial über ihre Längserstreckungsrichtung verteilt voneinander beabstandete Durchgangsbohrungen für Schraub- und/oder Steckverbinder auf. Vorteilhafterweise sind die Durchgangsbohrungen in dem Verbindungsschenkel der in Längserstreckungsrichtung einen im Wesentlichen U-förmigen Querschnitt aufweisenden Profilelemente ausgebildet. Gemäß einem weiteren Vorschlag der Erfindung sind die Durchgangsbohrungen als Langlochbohrungen ausgebildet, so dass auch Toleranzen hinsichtlich der Positionierung der sich beidseits der Brandschutzscheiben gegenüberliegenden bzw. gegenüberstehenden Profilelemente für die Schraub- und/oder Steckverbinder ausgleichbar sind.

Vorteilhafterweise sind die Köpfe von Schraub- und/oder Steckverbindern in dem von den Schenkeln eines in Längserstreckungsrichtung einen im Wesentlichen U-förmigen Querschnitt aufweisenden Profilelements begrenzten Raum angeordnet bzw. anordbar. Dies ermöglicht eine Anordnung, bei der die Köpfe von Schraub- und/oder Steckverbindern von den freien Schenkeln der Profilelemente überragt werden. Eine weitere Ausgestaltung der Erfindung sieht vor, dass die Köpfe von Schraub- und/oder Steckverbindern in einer Ebene liegen, welche parallel zu der von den äußeren senkrecht zu den Stoßflächen der Brandschutzscheiben verlaufenden Flächen der Glasscheiben der Brandschutzscheiben definierten Ebene liegt.

Gemäß einem weiteren vorteilhaften Vorschlag der Erfindung ist der von den Schenkeln eines in Längserstreckungsrichtung einen im Wesentlichen U-förmigen Querschnitt aufweisenden Profilelements begrenzte Raum mit einem weiteren Profilelement verschlossen bzw. verschließbar. Vorteilhafterweise verschließt das weitere Profilelement den von den Schenkeln eines in Längserstreckungsrichtung einen im Wesentlichen U-förmigen Querschnitt aufweisenden Profilelements begrenzten Raum bündig mit den parallel zu dem Verbindungsschenkel verlaufenden freien Schenkeln. Vorteilhafterweise sind so die Schraub- und/oder Steckverbinder abdeckbar, so dass der Eindruck einer optisch einheitlichen und sauberen Verfugung weiter verbessert wird.

Die eingangs genannte Aufgabe ist bei einer Brandschutzverglasung zur Vermeidung des Durchtritts von Feuer und/oder Rauch im Brandfall aus einem Raum in einen anderen Raum, mit mindestens zwei unter Belassung einer Fuge horizontal und/oder vertikal fluchtend zueinander angeordneten Brandschutzscheiben, wobei die Brandschutzscheiben jeweils aus einem Verbund von wenigstens zwei parallelen Glasscheiben, zwischen denen wenigstens eine Brandschutzschicht angeordnet ist, wobei die Brandschutzschicht gegenüber den Stoßflächen der Glasscheiben der Brandschutzscheiben rückversetzt ist, bestehen, und wobei in der zwischen den Stoßflächen der Brandschutzscheiben ausgebildeten Fuge ein Brandschutzmittel angeordnet ist, erfindungsgemäß dadurch gelöst, dass die Fuge beidseits des in der Fuge angeordneten Brandschutzmittels jeweils mit einem in Längserstreckungsrichtung einen im Wesentlichen pilzförmigen Querschnitt aufweisenden Profilelement abgedeckt ist, wobei die Profilelemente an den Glasscheiben mittels am Profilelement vorgesehenen Rastarmen, welche die Glasscheiben der Brandschutzscheiben hintergreifen, festgelegt bzw. festlegbar sind.

Vorteilhafterweise weisen die Profilelemente in Längserstreckungsrichtung einen im Wesentlichen T-förmigen Querschnitt mit einem Tragschenkel und einem senkrecht zu diesen verlaufenden Abdeckschenkel auf, wobei die freien Enden des Abdeckschenkels an den äußeren senkrecht zu den Stoßflächen der Brandschutzscheiben verlaufenden Flächen der Glasscheiben der Brandschutzscheiben anliegen bzw. aufliegen.

Eine besonders vorteilhafte Ausgestaltung der Erfindung sieht vor, dass die freien Enden des Abdeckschenkels in ihrer Erstreckungslänge derart gewählt sind, dass Toleranzen in der Breite der Fuge überdeckbar sind, so dass auch bei unterschiedlichen Fugenbreiten eine optisch einheitliche und saubere Verfugung realisierbar ist.

Vorteilhafterweise liegen die freien Enden des Abdeckschenkels der Profilelemente an den äußeren senkrecht zu den Stoßflächen der Brandschutzscheiben verlaufenden Flächen der Glasscheiben der Brandschutzscheiben unter Zwischenschaltung eines vorzugsweise feuerhemmenden Dichtmittels an bzw. auf. Gemäß einem weiteren vorteilhaften Vorschlag der Erfindung ist Dichtmittel an den Profilelementen angeordnet oder ausgebildet. Durch die erfindungsgemäße Verwendung des Dichtmittels wird zum einen die Abdichtung zwischen den Profilelementen und den Glasscheiben der Brandschutzscheiben verbessert und zum anderen verhindert, dass die an bzw. auf den Glasscheiben der Brandschutzscheiben an- bzw. aufliegenden Profilelemente die Glasscheiben der Brandschutzscheiben beschädigen, insbesondere verkratzen. In einer weiteren Ausgestaltung der Erfindung weist das Dichtmittel zur Verbesserung der Abdichtung wenigstens einen nasenartigen Vorsprung auf. Der nasenartige Vorsprung ist vorteilhafterweise im Endbereich der freien Enden der freien Schenkel ausgebildet. In einer bevorzugten Ausgestaltung der Erfindung ist das Dichtmittel gelresistent und feuerständig.

Eine weitere Ausgestaltung der Erfindung sieht vor, dass die erfindungsgemäßen Profilelemente aus Kunststoff, vorzugsweise aus einem feuerhemmenden Kunststoff, aus Holz oder aus Metall sind. In einer besonders bevorzugten Ausgestaltung der Erfindung sind die Profilelemente aus einem gelresistenten, feuerständigen Kunststoff.

Vorteilhafterweise ist das in der zwischen den Stoßflächen der Brandschutzscheiben ausgebildeten Fuge angeordnete Brandschutzmittel als Profilkörper ausgebildet.

Weitere Einzelheiten, Merkmale und Vorteile des Gegenstandes der Erfindung werden nachfolgend anhand der in den Figuren der Zeichnung dargestellten Ausführungsbeispiele näher beschrieben. Dabei zeigen:
- Fig. 1: einen Schnitt im Bereich der Fuge zweier in einer senkrechten Ebene fluchtend horizontal bzw. vertikal nebeneinander bzw. übereinander angeordneter Brandschutzscheiben eines Ausführungsbeispiels einer Brandschutzverglasung;
- Fig. 2: eine geschnittene Ansicht eines Profilelements nach Fig. 1;
- Fig. 3: einen Schnitt im Bereich der Fuge zweier in einer senkrechten Ebene fluchtend horizontal bzw. vertikal nebeneinander bzw. übereinander angeordneter Brandschutzscheiben eines weiteren Ausführungsbeispiels einer Brandschutzverglasung; und
- Fig. 4: eine geschnittene Ansicht eines Profilelements nach Fig. 3.

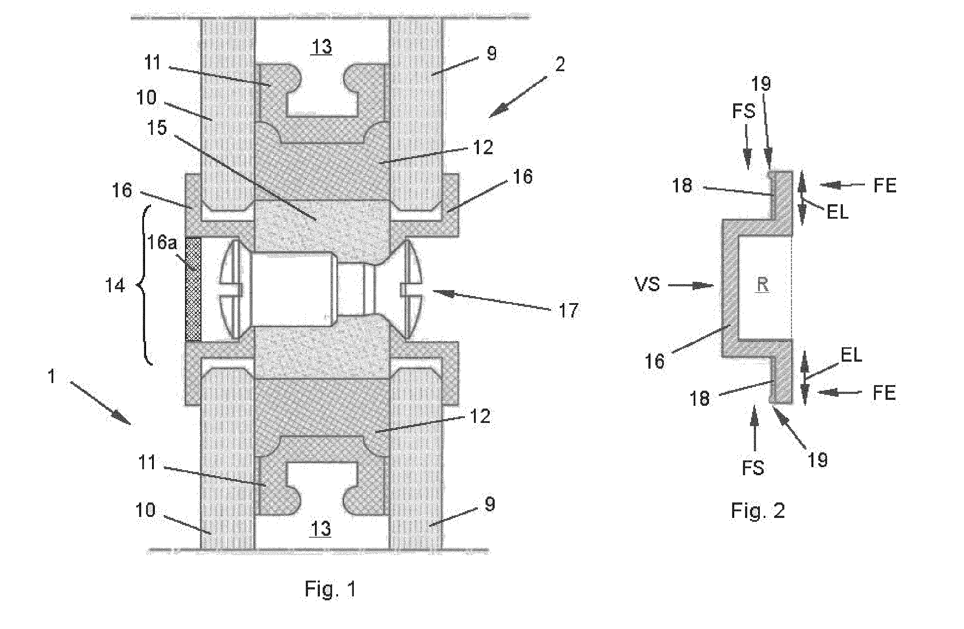

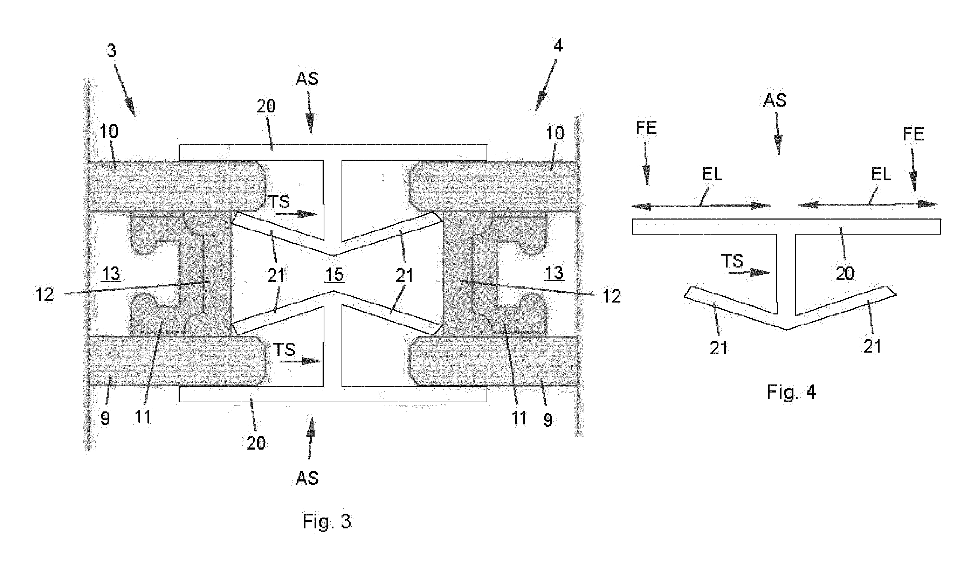

Die in den Figuren dargestellten Brandschutzverglasungen in Form einer Feuerschutztrennwand sind geeignet und vorgesehen, den Durchtritt von Feuer und Rauch im Brandfall aus einem Raum in einen anderen Raum zu verhindern. Es handelt sich jeweils um eine großflächige Verglasung, die aus mehreren Brandschutzscheiben (in Fig. 1 beispielhaft mit den Bezugszeichen 1 und 2 gekennzeichnet; in Fig. 3 beispielhaft mit den Bezugszeichen 3 und 4 gekennzeichnet) aufgebaut ist, welche in einer senkrechten Ebene fluchtend horizontal bzw. vertikal nebeneinander bzw. übereinander angeordnet sind. Dabei ist die Anordnung der Brandschutzscheiben 1 und 2 bzw. 3 und 4 zueinander grundsätzlich derart, dass zwischen benachbarten Rändern eine Fuge von größer 6 mm belassen ist, wie nachfolgend näher erläutert. Die jeweilige Brandschutzverglasung in ihrer Gesamtheit ist beispielsweise in einer Wandausnehmung eines Gebäudes gehalten oder unmittelbar an seitlichen Wänden sowie der Decke und dem Boden eines Gebäuderaumes befestigt.

Die Brandschutzscheiben 1 und 2 bzw. 3 und 4 können unterschiedliche Abmessungen aufweisen und entsprechend den architektonischen Erfordernissen, miteinander kombiniert werden. So können vergleichsweise lange Brandschutzscheiben sich in vertikaler Richtung oder horizontaler Richtung erstreckend angeordnet werden. Ferner können quadratische Brandschutzscheiben in vertikaler Richtung übereinander angeordnet, und dazu - um Höhe zu gewinnen - mit einer rechteckigen Brandschutzscheibe in senkrechter Richtung kombiniert werden. Darüber hinaus sind weitere Kombinationen von Rechteck-Brandschutzscheiben verwendbar, um eine Variabilität der möglichen Anordnungen und eine dadurch gewährte konstruktive Freiheit zu erzielen.

Prinzipiell sind die Brandschutzscheiben 1 und 2 bzw. 3 und 4 der in den Figuren dargestellten Brandschutzverglasungen identisch aufgebaut. Sie unterscheiden sich nur in Form und Abmessungen. Beispielhaft wird daher der Aufbau einer Brandschutzscheibe 1 unter Bezugnahme auf Fig. 1 der Zeichnung nachfolgend beschrieben:

Die Brandschutzscheibe 1 besteht aus zwei parallel mit Abstand zueinander angeordneten Scheiben 9 und 10 aus Einscheibensicherheitsglas (ESG-Scheibe). Zwischen den Glasscheiben 9 und 10 ist randumlaufend ein U-förmiger Abstandhalter 11 aus brandschutzmittelbeständigem und feuerresistentem Kunststoff angeordnet. Der Abstandhalter 11 ist etwas nach innen gegenüber den Rändern der beiden Glasscheiben 9 und 10 zurückversetzt. Die dadurch gebildete umlaufende Nut ist durch einen PU-Randverbund 12 ausgefüllt, so dass die beiden ESG-Scheiben 9 und 10 aneinander unter Bildung eines geschlossenen Innenraums nach Art einer Isolierverglasung fixiert sind. Zur Erzielung der gewünschten Brandschutzeigenschaften ist dieser Innenraum 13 mit einem gelartigen Brandschutzmittel gefüllt, das als solches an sich bekannt ist und daher nicht näher beschrieben wird. Im Gegensatz zu anderen Brandschutzgläsern schäumt das gelartige Brandschutzmittel im Brandfall nicht auf und kann auch den beschriebenen Innenraum 13 der Brandschutzscheibe nicht verlassen.

Der in Fig. 1 dargestellte Schnitt verdeutlicht die Anordnung der beiden Brandschutzscheiben 1 und 2 in Flucht übereinander, wobei zwischen den beiden Brandschutzscheiben 1 und 2 eine Stoßfuge 14, das heißt ein Abstand, belassen ist. In der zwischen den Stoßflächen der Brandschutzscheiben 1 und 2 ausgebildeten Stoßfuge 14 ist ein Brandschutzmittel 15 angeordnet. In dem Ausführungsbeispiel handelt es sich bei dem Brandschutzmittel 15 um ein streifenförmiges Intumeszenzmaterial, welches im Brandfall einen Wärmeübergang sowie Rauchdurchtritt von der Brandseite der Brandschutzverglasung her auf die brandabgewandte Seite verhindert. Die Stoßfuge 14 wird beidseits des in der Stoßfuge 14 angeordneten Brandschutzmittels 15 jeweils mit einem Profilelement 16 abgedeckt. Dabei liegen die Profilelemente 16 an dem Brandschutzmittel 15 angrenzend an.

Die aus einem feuerständigen Kunststoff bestehenden Profilelemente 16 weisen in Längserstreckungsrichtung einen hutförmigen bzw. topfförmigen Querschnitt auf. Wie Fig. 2 zeigt, sind die Profilelemente 16 dabei in Längserstreckungsrichtung mit einem im Wesentlichen U-förmigen Querschnitt mit zwei freien Schenkeln FS und einem senkrecht zu diesen verlaufenden Verbindungsschenkel VS versehen. Die freien Enden FE der freien Schenkel FS der Profilelemente 16 verlaufen parallel zu dem Verbindungsschenkel VS und liegen an bzw. auf den äußeren senkrecht zu den Stoßflächen der Brandschutzscheiben verlaufenden Flächen der Glasscheiben 9 bzw. 10 der Brandschutzscheiben 1 und 2 an bzw. auf, wobei der Verbindungsschenkel VS der Profilelemente 16 plan an bzw. auf dem Brandschutzmittel 15 angeordnet ist (vgl. Fig. 1). Durch Variation der Länge der freien Enden FE der freien Schenkel FS der Profilelemente 16 sind mit den Profilelementen 16 unterschiedliche Fugenbreiten abdeckbar. Die freien Enden FE der freien Schenkel FS sind in ihrer Erstreckungslänge EL derart gewählt bzw. wählbar, dass Toleranzen in der Breite der Fuge 14 überdeckbar sind.

Die Profilelemente 16 sind mit einer Schraubverbindung 17 mittels Schraube und Hülsenmutter miteinander verbunden. Dabei liegt das Brandschutzmittel 15 zwischen den Profilelementen 16. Die Stoßfuge 14 ist damit mit dem Brandschutzmittel 15, den Profilelementen 16 und der Schraubverbindung 17 rauch- und feuerdicht verschlossen. Das Brandschutzmittel 15 ist dabei mittels der Schraubverbindung 17 zwischen den Profilelementen 16 eingespannt. Für die Schraubverbindung 17 sind zumindest die Profilelemente 16, bei Bedarf auch das Brandschutzmittel 15 mit Durchgangsbohrungen versehen, die über die Längserstreckungsrichtung verteilt und voneinander beabstandet sind. Die Köpfe der Schraubverbindung 17 sind dabei jeweils in dem in Fig. 2 mit dem Bezugszeichen R gekennzeichneten Raum R angeordnet und liegen damit gegenüber den von den äußeren senkrecht zu den Stoßflächen der Brandschutzscheiben 1 und 2 verlaufenden Flächen d er Glasscheiben 9 bzw. 10 der Brandschutzscheiben 1 und 2 nach innen versetzt bzw. versenkt in der Stoßfuge 14. Der von den Schenkeln FS, VS eines in Längserstreckungsrichtung einen im Wesentlichen U-förmigen Querschnitt aufweisenden Profilelements 16 begrenzte Raum R ist, wie bei dem in Fig. 1 links dargestellten Profilelement 16 erkennbar, mit einem weiteren Profilelement 16a verschlossen bzw. verschließbar. Das weitere Profilelement 16a ist dazu in das Profilelement 16 einsteckbar bzw. einrastbar. Das weitere Profilelement 16a verschließt dabei den von den Schenkeln FS, VS eines in Längserstreckungsrichtung einen im Wesentlichen U-förmigen Querschnitt aufweisenden Profilelements 16 begrenzten Raum R bündig mit den parallel zu dem Verbindungsschenkel VS verlaufenden freien Schenkeln FS des Profilelements 16.

Wie anhand von Fig. 2 zu erkennen ist, weisen die freien Enden FE der freien Schenkel FS der Profilelemente 16 an der den äußeren senkrecht zu den Stoßflächen der Brandschutzscheiben 1 und 2 verlaufenden Flächen der Glasscheiben 9 bzw. 10 der Brandschutzscheiben 1 und 2 zugewandten Seite ein Dichtmittel 18 auf. Die freien Enden FE der freien Schenkel FS der Profilelemente 16 liegen so unter Zwischenschaltung des Dichtmittels 18 an bzw. auf den äußeren senkrecht zu den Stoßflächen der Brandschutzscheiben 1 und 2 verlaufenden Flächen der Glasscheiben 9 bzw. 10 der Brandschutzscheiben an bzw. auf. Neben einer verbesserten Abdichtung zwischen den Profilelementen 16 und den Glasscheiben 9 bzw. 10 der Brandschutzscheiben 1 und 2 durch das Dichtmittel 18 werden ferner Beschädigungen, insbesondere ein Verkratzen der Glasscheiben 9 und 10 der Brandschutzscheiben 1 und 2 verhindert. Das Dichtmittel 18 weist zur Verbesserung der Abdichtung im Endbereich der freien Enden der freien Schenkel FE einen nasenartigen Vorsprung 19 auf (vgl. Fig. 3).

Die Brandschutzscheiben 3 und 4 der in Fig. 3 dargestellten Brandschutzverglasung unterscheiden sich von den Brandschutzscheiben 1 und 2 der in Fig. 1 dargestellten Brandschutzverglasung durch die Ausgestaltung des Randverbunds. Beispielhaft wird daher der Aufbau der Brandschutzscheibe 4 unter Bezugnahme auf Fig. 3 der Zeichnung nachfolgend beschrieben:

Die Brandschutzscheibe 4 besteht aus zwei parallel mit Abstand zueinander angeordneten Scheiben 9 und 10 aus Einscheibensicherheitsglas (ESG-Scheibe). Zwischen den Glasscheiben 9 und 10 ist randumlaufend ein U-förmiger Abstandhalter 11 aus brandschutzmittelbeständigem und feuerresistentem Kunststoff angeordnet. Der Abstandhalter 11 ist nach innen gegenüber den Rändern der beiden Glasscheiben 9 und 10 zurückversetzt. Die dadurch gebildete umlaufende Nut ist durch einen PU-Randverbund 12 ausgefüllt, so dass die beiden ESG-Scheiben 9 und 10 aneinander unter Bildung eines geschlossenen Innenraums nach Art einer Isolierverglasung fixiert sind. Der Randverbund 12 ist ebenfalls nach innen gegenüber den Rändern der beiden Glasscheiben 9 und 10 zurückversetzt. Zur Erzielung der gewünschten Brandschutzeigenschaften ist dieser Innenraum 13 mit einem gelartigen Brandschutzmittel gefüllt, das als solches an sich bekannt ist und daher nicht näher beschrieben wird. Im Gegensatz zu anderen Brandschutzgläsern schäumt das gelartige Brandschutzmittel im Brandfall nicht auf und kann auch den beschriebenen Innenraum 13 der Brandschutzscheibe nicht verlassen.

Der in Fig. 3 dargestellte Schnitt verdeutlicht die Anordnung der beiden Brandschutzscheiben 3 und 4 in Flucht nebeneinander, wobei zwischen den beiden Brandschutzscheiben 3 und 4 eine Stoßfuge 14, das heißt ein Abstand, belassen ist. In der zwischen den Stoßflächen der Brandschutzscheiben 3 und 4 ausgebildeten Stoßfuge 14 ist ein Brandschutzmittel 15 angeordnet. In dem Ausführungsbeispiel handelt es sich bei dem Brandschutzmittel 15 um ein streifenförmiges Intumeszenzmaterial, welches im Brandfall einen Wärmeübergang sowie Rauchdurchtritt von der Brandseite der Brandschutzverglasung her auf die brandabgewandte Seite verhindert.

Die Stoßfuge 14 wird beidseits des in der Stoßfuge 14 angeordneten Brandschutzmittels 15 jeweils mit einem Profilelement 20 abgedeckt. Die aus einem feuerständigen Kunststoff bestehenden Profilelemente 20 weisen in Längserstreckungsrichtung einen im Wesentlichen pilzförmigen Querschnitt auf. Wie Fig. 3 und Fig. 4 zeigen, weisen die Profilelemente 20 dabei in Längserstreckungsrichtung einen im Wesentlichen T-förmigen Querschnitt mit einem Tragschenkel TS und einem senkrecht zu diesen verlaufenden Abdeckschenkel AS auf. Die freien Enden des Abdeckschenkels AS liegen dabei an bzw. auf den äußeren senkrecht zu den Stoßflächen der Brandschutzscheiben verlaufenden Flächen der Glasscheiben 9 bzw. 10 an bzw. auf. Durch Variation der Länge der freien Enden des Abdeckschenkels AS der Profilelemente 20 sind mit den Profilelementen 16 unterschiedliche Fugenbreiten abdeckbar. Die freien Enden des Abdeckschenkels AS sind in ihrer Erstreckungslänge EL derart gewählt bzw. wählbar, dass Toleranzen in der Breite der Fuge 14 überdeckbar sind.

Die Profilelemente 20 weisen vom Tragschenkel TS abgehende Rastarme 21 auf, welche die Glasscheiben 9 bzw. 10 der Brandschutzscheiben hintergreifen, wodurch die Profilelemente 20 an den Glasscheiben festgelegt bzw. festlegbar sind. Die vom Tragschenkel TS abgehenden Rastarme 21 sind vorteilhafterweise elastisch verformbar, so dass die Profilelemente 20 in die Fuge einsteckbar bzw. einpressbar sind. Die Stoßfuge 14 ist damit rauch- und feuerdicht verschlossen.

Die in den Figuren der Zeichnung dargestellten und im Zusammenhang mit diesen erläuterten Ausführungsbeispiele der Erfindung dienen lediglich der Erläuterung der Erfindung und sind für diese nicht beschränkend.

### Bezugszeichenliste

- 1: Brandschutzscheibe
- 2: Brandschutzscheibe
- 3: Brandschutzscheibe
- 4: Brandschutzscheibe
- 9: Glasscheibe/Scheibe aus Einscheibensicherheitsglas
- 10: Glasscheibe/Scheibe aus Einscheibensicherheitsglas
- 11: Abstandhalter
- 12: Randverbund
- 13: Innenraum
- 14: Stoßfuge
- 15: Brandschutzmittel
- 16: Profilelement
- 16a: weiteres Profilelement
- 17: Schraubverbindung/Schraubverbinder
- 18: Dichtmittel/Dichtung
- 19: Nase (Dichtmittel/Dichtung (18))
- 20: Profilelement (pilzförmiger Querschnitt)
- 21: Rastarm
- AS: Abdeckschenkel (Profilelement (20))
- EL: Erstreckungslänge (freies Ende (FE))
- FE: freies Ende freier Schenkel (FS)
- FS: freier Schenkel (Profilelement (16))
- R: Raum
- TS: Tragschenkel (Profilelement (20))
- VS: Verbindungsschenkel (Profilelement (16))

## Patentansprüche

1. Brandschutzverglasung zur Vermeidung des Durchtritts von Feuer und/oder Rauch im Brandfall aus einem Raum in einen anderen Raum,
mit
mindestens zwei
unter Belassung einer Fuge (14)
horizontal und/oder vertikal fluchtend
zueinander angeordneten
Brandschutzscheiben,
wobei
die Brandschutzscheiben
jeweils
aus einem Verbund von
wenigstens zwei
parallelen Glasscheiben (9, 10),
zwischen denen wenigstens eine Brandschutzschicht angeordnet ist, bestehen,
und wobei
in der
zwischen den Stoßflächen der Brandschutzscheiben ausgebildeten Fuge (14)
ein Brandschutzmittel (15)
angeordnet ist,
**dadurch gekennzeichnet, dass**
die Fuge (14)
beidseits des in der Fuge (14) angeordneten Brandschutzmittels (15) jeweils mit einem Profilelement (16)
abgedeckt ist,
wobei
die Profilelemente (16) an dem Brandschutzmittel (15) angrenzend anliegen.

2. Brandschutzverglasung nach Anspruch 1, **dadurch gekennzeichnet, dass** das in der Fuge (14) angeordnete Brandschutzmittel (15) zwischen den Profilelementen (16) eingespannt bzw. einspannbar ist.

3. Brandschutzverglasung nach Anspruch 1 oder Anspruch 2, **dadurch gekennzeichnet, dass** die Profilelemente (16) mittels wenigstens einer Schraubverbindung (17) und/oder mittels wenigstens einer Steckverbindung miteinander verbunden bzw. verbindbar sind.

4. Brandschutzverglasung nach einem der Ansprüche 1 bis 3, **dadurch gekennzeichnet, dass** das Brandschutzmittel (15) in der zwischen den Stoßflächen der Brandschutzscheiben ausgebildeten Fuge (14) ausschließlich in dem Bereich des Abstands der zwei auf Abstand gehaltenen, parallelen Glasscheiben (9, 10) der Brandschutzscheiben angeordnet ist.

5. Brandschutzverglasung nach einem der Ansprüche 1 bis 4, **dadurch gekennzeichnet, dass** die Profilelemente (16) wenigstens teilweise in der zwischen den Stoßflächen der Brandschutzscheiben ausgebildeten Fuge (14) geführt sind.

6. Brandschutzverglasung nach einem der Ansprüche 1 bis 5, **dadurch gekennzeichnet, dass** die Profilelemente (16) in Längserstreckungsrichtung einen im Wesentlichen hutförmigen bzw. topfförmigen Querschnitt aufweisen.

7. Brandschutzverglasung nach einem der Ansprüche 1 bis 6, **dadurch gekennzeichnet, dass** die Profilelemente (16) in Längserstreckungsrichtung einen im Wesentlichen U-förmigen Querschnitt mit zwei freien Schenkeln (FS) und einem senkrecht zu diesen verlaufenden Verbindungsschenkel (VS) aufweisen, wobei die freien Enden (FE) der freien Schenkel (FS) parallel zu dem Verbindungsschenkel (VS) verlaufend ausgebildet sind und an den äußeren senkrecht zu den Stoßflächen der Brandschutzscheiben verlaufenden Flächen der Glasscheiben (9, 10) der Brandschutzscheiben anliegen bzw. aufliegen.

8. Brandschutzverglasung nach Anspruch 7, **dadurch gekennzeichnet, dass** die freien Enden (FE) der freien Schenkel (FS) in ihrer Erstreckungslänge (EL) derart gewählt sind, dass Toleranzen in der Breite der Fuge (14) überdeckbar sind.

9. Brandschutzverglasung nach Anspruch 7 oder Anspruch 8, **dadurch gekennzeichnet, dass** die freien Enden (FE) der freien Schenkel (FS) der Profilelemente (16) an den äußeren senkrecht zu den Stoßflächen der Brandschutzscheiben verlaufenden Flächen der Glasscheiben (9, 10) der Brandschutzscheiben unter Zwischenschaltung eines Dichtmittels (18) anliegen bzw. aufliegen.

10. Brandschutzverglasung nach Anspruch 9, **dadurch gekennzeichnet, dass** das Dichtmittel (18) an den Profilelementen (16) angeordnet oder ausgebildet ist.

11. Brandschutzverglasung nach einem der Ansprüche 7 bis 10, **dadurch gekennzeichnet, dass** die freien Schenkel (FS) der einen im Wesentlichen U-förmigen Querschnitt aufweisenden Profilelemente (16) in einer parallel zu den Stoßflächen der Brandschutzscheiben liegenden Ebene verlaufen.

12. Brandschutzverglasung nach einem der Ansprüche 1 bis 11, **dadurch gekennzeichnet, dass** die Profilelemente (16) und/oder das Brandschutzmaterial (15) über ihre Längserstreckungsrichtung verteilt voneinander beabstandete Durchgangsbohrungen für Schraub- und/oder Steckverbinder aufweisen.

13. Brandschutzverglasung nach Anspruch 12, **dadurch gekennzeichnet, dass** die Durchgangsbohrungen in dem Verbindungsschenkel (VS) der in Längserstreckungsrichtung einen im Wesentlichen U-förmigen Querschnitt aufweisenden Profilelemente (16) ausgebildet sind.

14. Brandschutzverglasung nach Anspruch 12 oder Anspruch 13, **dadurch gekennzeichnet, dass** die Durchgangsbohrungen als Langlochbohrungen ausgebildet sind.

15. Brandschutzverglasung nach einem der Ansprüche 3 bis 14, **dadurch gekennzeichnet, dass** die Köpfe von Schraub- und/oder Steckverbindern in dem von den Schenkeln (FS, VS) eines in Längserstreckungsrichtung einen im Wesentlichen U-förmigen Querschnitt aufweisenden Profilelements (16) begrenzten Raum (R) angeordnet bzw. anordbar sind.

16. Brandschutzverglasung nach einem der Ansprüche 7 bis 15, **dadurch gekennzeichnet, dass** der von den Schenkeln (FS, VS) eines in Längserstreckungsrichtung einen im Wesentlichen U-förmigen Querschnitt aufweisenden Profilelements (16) begrenzte Raum (R) mit einem weiteren Profilelement (16a) verschlossen bzw. verschließbar ist.

17. Brandschutzverglasung nach Anspruch 16, **dadurch gekennzeichnet, dass** das weitere Profilelement (16a) den von den Schenkeln (FS, VS) eines in Längserstreckungsrichtung einen im Wesentlichen U-förmigen Querschnitt aufweisenden Profilelements (16) begrenzten Raum (R) bündig mit den parallel zu dem Verbindungsschenkel (VS) verlaufenden freien Schenkeln (FS) des Profilelements (16) verschließt.

18. Brandschutzverglasung nach einem der Ansprüche 1 bis 17, **dadurch gekennzeichnet, dass** die Profilelemente (16) aus Kunststoff, vorzugsweise aus einem feuerhemmenden Kunststoff, aus Holz oder aus Metall sind.

19. Brandschutzverglasung nach einem der Ansprüche 1 bis 18, **dadurch gekennzeichnet, dass** das in der zwischen den Stoßflächen der Brandschutzscheiben ausgebildeten Fuge (14) angeordnete Brandschutzmittel als Profilkörper ausgebildet ist.

20. Brandschutzverglasung zur Vermeidung des Durchtritts von Feuer und/oder Rauch im Brandfall aus einem Raum in einen anderen Raum mit mindestens zwei unter Belassung einer Fuge (14) horizontal und/oder vertikal fluchtend zueinander angeordneten Brandschutzscheiben, wobei die Brandschutzscheiben jeweils aus einem Verbund von wenigstens zwei parallelen Glasscheiben (9, 10), zwischen denen wenigstens eine Brandschutzschicht angeordnet ist, wobei die Brandschutzschicht gegenüber den Stoßflächen der Glasscheiben (9, 10) der Brandschutzscheiben rückversetzt ist, bestehen, und wobei in der zwischen den Stoßflächen der Brandschutzscheiben ausgebildeten Fuge (14) ein Brandschutzmittel (15) angeordnet ist, **dadurch gekennzeichnet, dass** die Fuge (14) beidseits des in der Fuge angeordneten Brandschutzmittels (15) jeweils mit einem in Längserstreckungsrichtung einen im Wesentlichen pilzförmigen Querschnitt aufweisenden Profilelement (20) abgedeckt ist, wobei die Profilelemente (20) an den Glasscheiben (9, 10) mittels an den Profilelementen (20) vorgesehenen Rastarmen (21), welche die Glasscheiben (9, 10) der Brandschutzscheiben hintergreifen, festgelegt bzw. festlegbar sind.

21. Brandschutzverglasung nach Anspruch 20, **dadurch gekennzeichnet, dass** die Profilelemente (20) in Längserstreckungsrichtung einen im Wesentlichen T-förmigen Querschnitt mit einem Tragschenkel (TS) und einem senkrecht zu diesen verlaufenden Abdeckschenkel (AS) aufweisen, wobei die freien Enden des Abdeckschenkels (AS) an den äußeren senkrecht zu den Stoßflächen der Brandschutzscheiben verlaufenden Flächen der Glasscheiben (9, 10) der Brandschutzscheiben anliegen bzw. aufliegen.

22. Brandschutzverglasung nach Anspruch 21, **dadurch gekennzeichnet, dass** die freien Enden des Abdeckschenkels (AS) in ihrer Erstreckungslänge (EL) derart gewählt sind, dass Toleranzen in der Breite der Fuge (14) überdeckbar sind.

23. Brandschutzverglasung nach Anspruch 21 oder Anspruch 22, **dadurch gekennzeichnet, dass** die freien Enden des Abdeckschenkels (AS) der Profilelemente (20) an den äußeren senkrecht zu den Stoßflächen der Brandschutzscheiben verlaufenden Flächen der Glasscheiben (9, 10) der Brandschutzscheiben unter Zwischenschaltung eines Dichtmittels anliegen bzw. aufliegen.

24. Brandschutzverglasung nach Anspruch 23, **dadurch gekennzeichnet, dass** das Dichtmittel an den Profilelementen (20) angeordnet oder ausgebildet ist.

25. Brandschutzverglasung nach einem der Ansprüche 20 bis 24, **dadurch gekennzeichnet, dass** die Profilelemente (20) aus Kunststoff, vorzugsweise aus einem feuerhemmenden Kunststoff sind.

26. Brandschutzverglasung nach einem der Ansprüche 20 bis 25, **dadurch gekennzeichnet, dass** das in der zwischen den Stoßflächen der Brandschutzscheiben ausgebildeten Fuge (14) angeordnete Brandschutzmittel (15) als Profilkörper ausgebildet ist.
